# EUROPÄISCHE PATENTSCHRIFT

(11) **EP 2 984 925 B1**
(45) Veröffentlichungstag und Bekanntmachung des Hinweises auf die Patenterteilung: **25.12.2019**
(21) Anmeldenummer: 15001965.1
(22) Anmeldetag: 01.07.2015
(51) Int. Cl.: A01K 1/00, A01K 1/02

(54) **FREILAUFBOX**
FREE CIRCULATION BOX
BOX A CIRCULATION LIBRE

(30) Priorität: 11.08.2014 DE 102014011654
(43) Veröffentlichungstag der Anmeldung: 17.02.2016
(73) Patentinhaber: Ingenieurbüro Agrar- und Energie GmbH, 04808 Wurzen (DE)
(72) Erfinder: Köppchen, Uwe, 04808 Wurzen (DE)
(74) Vertreter: Müller, Volkmar

(56) Entgegenhaltungen:
- EP-A2- 1 520 470
- DE-U- 7 409 700
- FR-A1- 2 206 901
- US-A1- 2008 236 502

## Beschreibung

Die Erfindung betrifft eine Freilaufbox für Schweine, insbesondere für Sauen und Ferkel. Diese Freilaufboxen besitzen oft eine rechteckige Grundfläche, wobei diese durch diesbezüglich übliche Begrenzungen und/oder Türen abgegrenzt sind.

Die DE 2356872 A1 offenbart eine Tor-Anordnung für die Behandlung von Vieh, insbesondere einer Kuh. Diese Anordnung besitzt einen Tor-Rahmen, welcher in eine Zaunlücke eingesetzt ist. Am senkrechten Scharnier des Tor-Rahmens ist ein Tor angeordnet, welches somit geschwenkt werden kann. Das Tor lässt sich teilweise schwenken, jedoch nicht um 360°.

Die DE 74 09 700 U offenbart einen Gitterkäfig für Abferkelbuchten, mit zwei auseinanderschwenkbaren, freitragenden Seitenteilen, die parallel zueinander und zwischen einem Trog angeordnet sind. Dieser Gitterkäfig kann im geöffneten Zustand nicht die Seitenwand der Abferkelbucht sein, da diese Funktionalität fehl.

Die EP 1 520 470 A2 offenbart eine rechteckige Abferkelbucht mit einem Sauenkäfig, welcher zwei gitterartig aufgebaute Seitenwände besitzt. Die beschriebene Abferkelbucht besitzt funktionsbedingt eine rechteckige Grundfläche mit einer gesonderten Umzäunung. Der Sauenkäfig besitzt bei maximaler Öffnung eine im Wesentlichen trapezförmige Grundfläche, so dass nicht die gesamte Grundfläche der rechteckigen Abferkelbucht für die Sau zur Verfügung steht. Der Sauenkäfig, welcher zwei gitterartig aufgebaute Seitenwände besitzt, ermöglicht es im geöffneten Zustand nicht, dass beide Seitenwände parallel angeordnet werden können, um u. a. eine gewünschte maximale Auslastung der Grundfläche zu erreichen.

Freilaufboxen, welchen den derzeitigen Anforderungen des Tierwohls entsprechen, besitzen zumindest eine Mindestgrundfläche, beispielsweise in Deutschland eine Mindestgrundfläche von 6 m².

Außerdem wird diesbezüglich angestrebt, die Sauen nur so wenig wie möglich in ihrer Bewegungsfreiheit, insbesondere in räumlicher und/oder zeitlicher Hinsicht, beispielsweise während der Geburt der Ferkel, den ersten Tagen nach der Geburt der Ferkel, zum Zwecke der Reinigung oder des Zuganges des Tierarztes, einzuschränken. Dem Tierarzt muss beispielsweise ermöglicht sein, die Sau kurzfristig für eine Untersuchung oder Behandlung zu arretieren.

Diese Begrenzungen und/oder Türen der Freilaufboxen müssen der Art gestaltet und dimensioniert sein, dass Personen vor aggressiven Tieren sicher geschützt sind, die Tiere sich nicht verletzen und die freilaufenden Tiere, ob Sau oder Ferkel, daran gehindert sind, die Bucht unerlaubt zu verlassen.

Die Handhabungen des Personals die die Freilaufbox bzw. deren Teile, wie Türen, betreffen, sollen unter Nutzung nur einer Hand des Personals, einer sogenannte Einhandbedienung, erfolgen können. D. h. insbesondere vom Personal mit einer Hand zu bewegen und/oder zu arretieren sind.

Eine solche Freilaufbox ist bisher aus dem Stand der Technik nicht bekannt; wird jedoch dringend benötigt.

Aufgabe der Erfindung ist es, eine Freilaufbox mit Schwenkmechanismus bereitzustellen, welche vorgenannten Anforderungen erfüllt.

Die Aufgabe der Erfindung wird durch eine Freilaufbox mit Schwenkmechanismus mit den Merkmalen gemäß Anspruch 1 gelöst.

Erfindungswesentlich ist, dass
sich zumindest drei verschiedene Gestaltungen der für die Sau (S) zugänglichen Bereiche der Grundfläche der Freilaufbox ergeben:
- sind die beiden Schwenkmechanismen (1) mit dem Türmechanismus (3) parallel zur und an der Seitenwand (5.1) positioniert und die jeweiligen Schwenkarretierung (3.3) arretiert, kann die Sau (S) sich unbeschränkt in der Freilaufbox bewegen und die Freilaufbox ist in sich geschlossen, aber offen für die Sau (S),
- sind die beiden Schwenkmechanismen (1) mit dem Türmechanismus (3) parallel zur und an der stehenden Sau (S) positioniert, die beiden Türmechanismen (3) miteinander verbunden und die jeweiligen Schwenkarretierung (3.3) nicht arretiert, kann die Sau (S) sich in der Freilaufbox dennoch beschränkt bewegen kann,
sind die beiden Schwenkmechanismen (1) mit dem Türmechanismus (3) diagonal bzw. angewinkelt zur und an der Seitenwand (5.1) und an der stehenden Sau (S) positioniert, die beiden Türmechanismen (1) miteinander verbunden und die jeweiligen Schwenkarretierung (3.3) arretiert, steht die Sau (S) diagonal fixiert in der Freilaufbox. Der Aufbau dieses erfindungsgemäßen Schwenkmechanismus ist in technischer Hinsicht überraschend einfach und seine Bedienung und Manipulation kann vom Bedienpersonal mit einer Hand und ohne Verwendung von Werkzeugen erfolgen. Der Befestigungsrahmen 2 kann im Sinne der Erfindung entweder nicht drehbar, wobei in diesem Fall der Ausleger 2.1 schwenkbar angeordnet ist, oder drehbar, wobei in diesem Fall der Ausleger 2.1 schwenkbar oder fest angeordnet ist, angeordnet sein.

Die Dimensionierung der Teile des Schwenkmechanismus und die Auswahl der eingesetzten Materialien erfolgt in üblicher Art und Weise unter Berücksichtigung der jeweiligen Erfordernisse, beispielsweise der jeweiligen Grundfläche der Freilaufbox. Türelemente 3.1 besitzen einen diesbezüglich üblichen Aufbau, beispielsweise in offener und/oder geschlossener Bauweise.

Bei offener Bauweise kommen regelmäßig Gitterkonstruktionen, insbesondere unter Verwendung von Rohrmaterial, zum Einsatz.

Durch die gewählte Auswahl und Anordnung wird insbesondere erreicht, dass die Türelemente 3.1, auch im Zusammenspiel mit den anderen Teilen der Freilaufbox, das Personen vor aggressiven Tieren sicher geschützt, die Tiere sich nicht verletzen können und die freilaufenden Tiere, ob Sau oder Ferkel, daran gehindert sind, die Bucht unerlaubt zu verlassen.

Die abhängigen Ansprüche 2 bis 9 enthalten vorteilhafte Ausgestaltungen der Erfindung ohne diese damit zu begrenzen.

Bevorzugt ist, dass der Türmechanismus 3 eine Schwenkarretierung 3.3 besitzt. Damit ist ermöglicht, dass in technisch einfacher Art und Weise die Sau sicher fixiert werden kann. Außerdem ist ermöglicht, dass die Sau in einem bestimmten Bereich der Grundfläche abdrängbar ist, so dass der freigelegte Bereich beispielsweise vom Personal gereinigt werden kann.

Wird der Schwenkmechanismus in seiner Tor-Funktion genutzt, kann der Öffnungswinkel eingestellt werden, so dass beispielsweise nur die Ferkel oder eine Person die Freilaufbox betreten oder verlassen können, ohne dass dies für die Sau auch gilt.

Bevorzugt ist, dass die Freilaufbox zumindest zwei Schwenkmechanismen 1 umfasst. Durch den Einsatz von zwei Schwenkmechanismen 1 können die bisherigen Abferkelkäfige ersetzt werden. Außerdem ist die Diagonalaufstellung für die Geburt ermöglicht Nach der Geburt ist die Längsaufstellung für das Säugen und Bewegen der Sau in der Freilaufbox ermöglicht. Besitzen die Ferkel nach einigen Tagen ihre volle Bewegungsaktivität können die zwei Schwenkmechanismen 1 an die Seite geklappt werden und es entsteht eine Freilaufzone in der Freilaufbucht.

Dies ist alles ohne aufwendigen Umbau und mit derselben technischen Grundausrüstung der Freilaufbox möglich, wobei die notwendigen Positionswechsel der Schwenkmechanismen 1 und deren Teile grundsätzlich im Einhandmodus realisiert werden können.

Besitzt die Freilaufbox zwei Schwenkmechanismen 1 ergeben sich eine Reihe von unterschiedlichen Möglichkeiten für die Gestaltung der für die Sau zugänglichen Bereiche der Grundfläche der Freilaufbox bzw. der Nutzung der Freilaufbox.

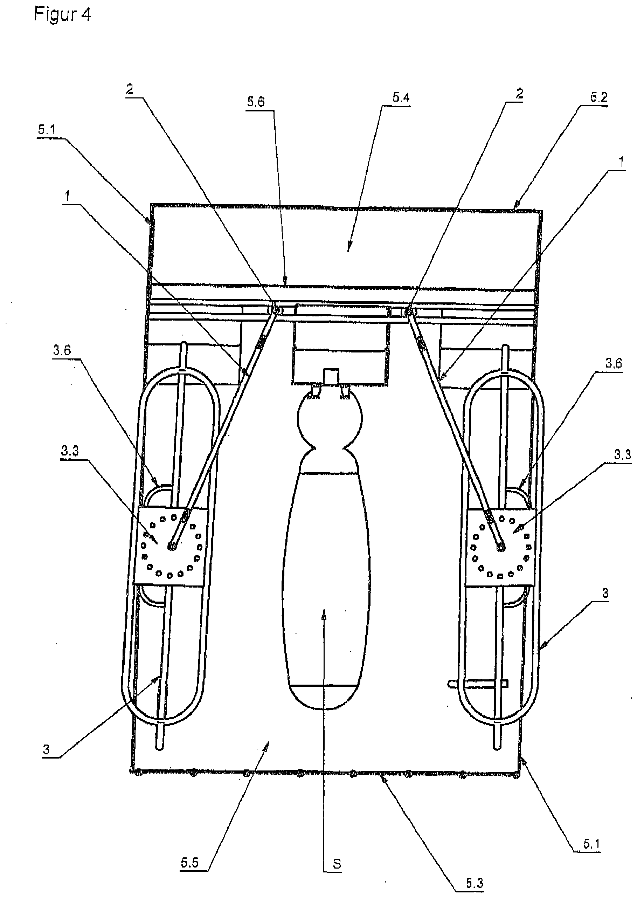

Sind die beiden Schwenkmechanismen 1 mit dem Türmechanismus parallel zur und an der Seitenwand 5.1 positioniert und die jeweiligen Schwenkarretierung 3.3 arretiert kann die Sau sich unbeschränkt in der Freilaufbox bewegen und die Freilaufbox ist in sich geschlossen, aber offen für die Sau (Fig. 4).

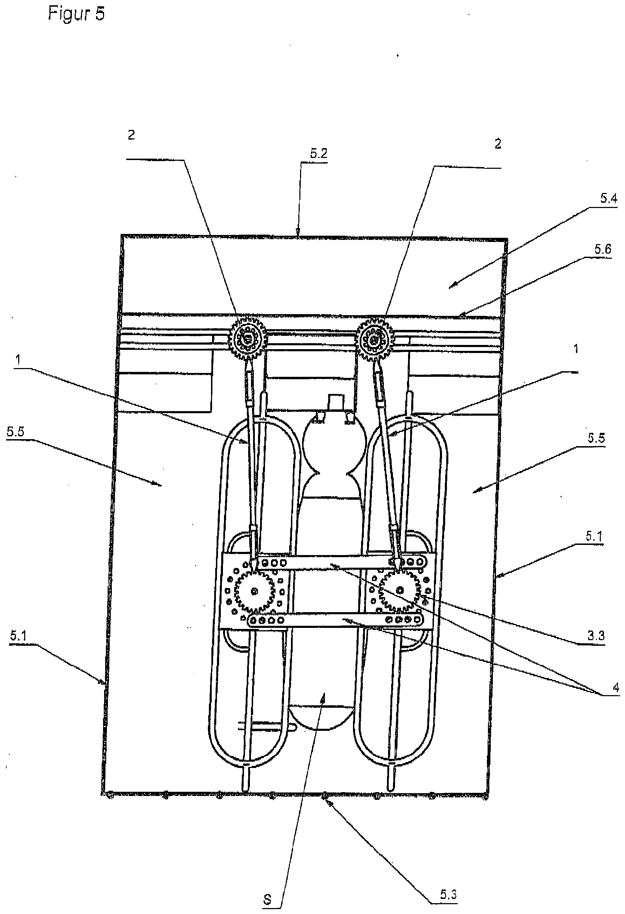

Sind die beiden Schwenkmechanismen 1 mit dem Türmechanismus parallel zur und an der stehenden Sau positioniert, die beiden Türmechanismen 1 miteinander verbunden und die jeweiligen Schwenkarretierung 3.3 nicht arretiert, kann die Sau sich in der Freilaufbox dennoch beschränkt bewegen. Die Sau ist somit gehindert, Ferkel an der Wand zu erdrücken, wenn sie sich auf den Boden legt. Damit kann die Gefahr, dass die Sau die jungen Ferkel, insbesondere beim Hinlegen drückt, wirkungsvoll gebannt werden (Fig. 5).

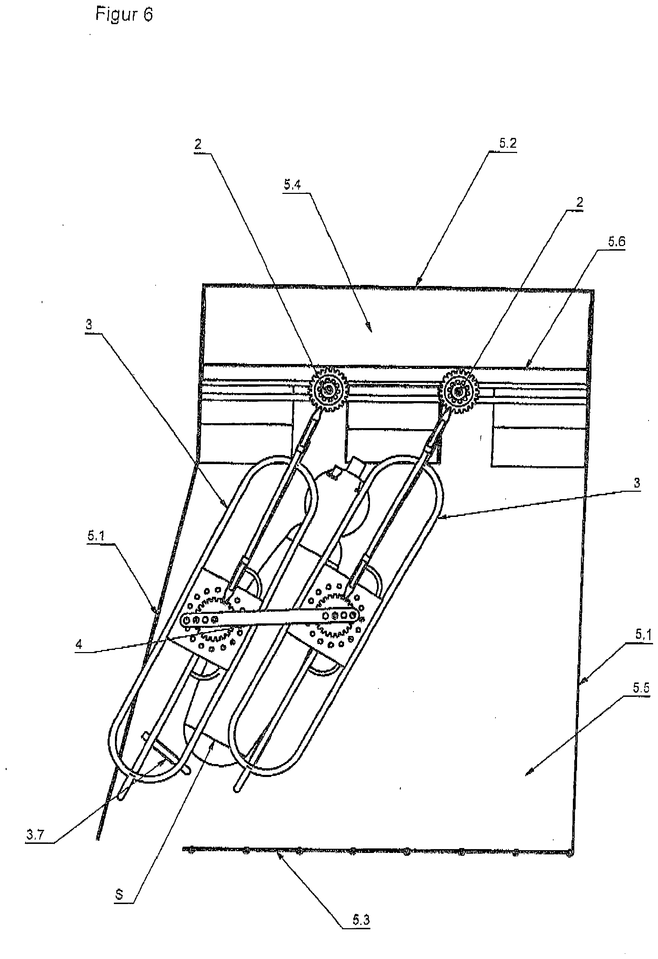

Sind die beiden Schwenkmechanismen 1 mit dem Türmechanismus diagonal bzw. angewinkelt zur und an der Seitenwand 5.1 und an der stehenden Sau positioniert, die beiden Türmechanismen 1 miteinander verbunden und die jeweiligen Schwenkarretierung 3.3 arretiert, steht die Sau diagonal fixiert in der Freilaufbox, d.h. es besteht eingeschränkte Bewegungsfreiheit. Diese Position kann beispielsweise vor und während der Geburt der Ferkel eingenommen werden (Fig. 6).

Die Aufgabe der Erfindung wird außerdem durch eine Freilaufbox mit Schwenkmechanismus mit den Merkmalen gemäß Anspruch 10 gelöst. Erfindungsgemäß kann das System der Freilaufbox als Jungtieraufzuchtbox oder Jungtierbehandlungsstand zur Fixierung von Kälbern, Schafen und junge Ziegen, in der konventionellen Tierhaltung oder der ökologischen Nutztierhaltung im Öko-Landbau eingesetzt werden.

Weitere Merkmale, Eigenschaften und Vorteile der vorliegenden Erfindung ergeben sich aus der nachfolgenden Beschreibung von Ausführungsbeispielen unter Bezugnahme auf die Figur 1 bis 7.

Es zeigen:
- Fig. 1: ein Ausführungsbeispiel eine Ausführungsform des Schwenkmechanismus in einer Seitenansicht,
- Fig. 2: eine Ausführungsform des Türmechanismus 3 in einer Seitenansicht,
- Fig. 3: ein Ausführungsbeispiel eine weitere Ausführungsform des Schwenkmechanismus in einer Seitenansicht als Türelement,
- Fig. 4: ein Ausführungsbeispiel einer Ausführungsform der erfindungsgemäßen Freilaufbox mit zwei Schwenkmechanismen 1 in einer Draufsicht als geöffnete Freilaufbox,
- Fig. 5: ein Ausführungsbeispiel einer weiteren Ausführungsform der erfindungsgemäßen Freilaufbox mit zwei Schwenkmechanismen 1 in einer Draufsicht, als parallel bewegliche Freilaufbox,
- Fig. 6: ein Ausführungsbeispiel einer weiteren Ausführungsform der erfindungsgemäßen Freilaufbox mit zwei Schwenkmechanismen 1 in einer Draufsicht als Diagonalbox geführt und
- Fig. 7: ein Ausführungsbeispiel einer alternativen Ausführungsform des Schwenkmechanismus 1 in einer perspektivischen Seitenansicht.

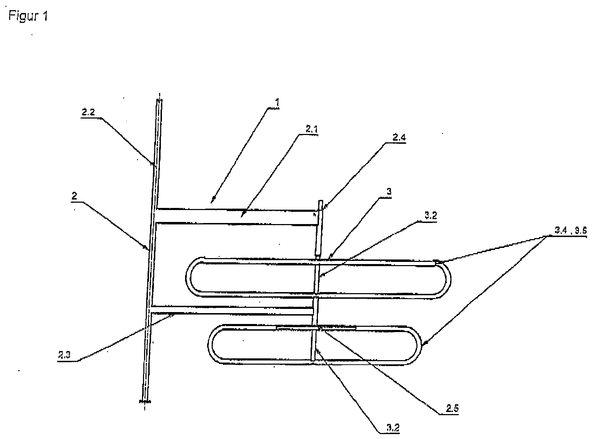

Fig. 1 zeigt ein Ausführungsbeispiel einer Ausführungsform des Schwenkmechanismus 1 in einer Seitenansicht. Der Schwenkmechanismus zumindest umfasst einen Befestigungsrahmen 2 mit einer Basisachse 2.2 an welcher ein Ausleger 2.1 angeordnet ist, und ein Türmechanismus 3, welcher zumindest ein Türelement 3.1 mit einer Drehachse 3.2 besitzt, wobei diese Drehachse 3.2 parallel zur Basisachse 2.2 angeordnet ist. Der Türmechanismus 3 ist über die Drehachse 3.2 schwenkbar am Befestigungsrahmen 2 angeordnet.

Der Befestigungsrahmen 2 besitzt außerdem einen Führungsausleger 2.3, an welchem der Türmechanismus 3 schwenkbar über die Drehachse 3.2 an gelenkt ist.

Der Führungsausleger 2.3 besitzt eine Führungsöffnung 2.5 und der Ausleger 2.1 besitzt eine Öffnung 2.4, durch welche die Drehachse 3.2 des Türmechanismus 3 jeweils verläuft.

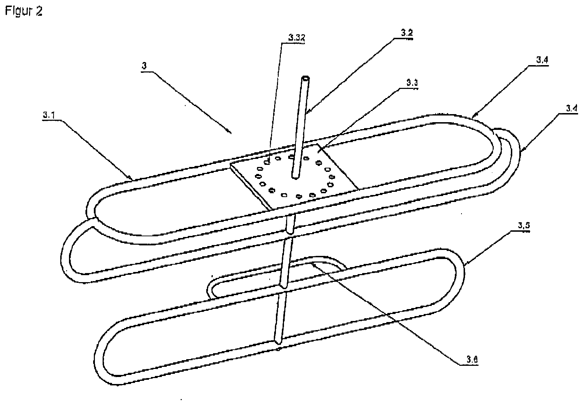

Fig. 2 zeigt eine mögliche Ausführungsform des Türmechanismus 3 in einer Seitenansicht. Der Türmechanismus 3 besitzt ein Türelement 3.1 mit einer Drehachse 3.2. Am Türmechanismus 3 eine Schwenkarretierung 3.3 angeordnet, hier in Form einer Lochscheibe 3.32 in welchen ein Arretierungshaken 3.31 eingesteckt werden kann (in Fig. 2 nicht dargestellt), so dass der Türmechanismus 3 in einer vorbestimmten Stellung stufenweise arretiert werden kann.

Alternativ können auch andere Arretierungen, welche das Verschwenken des Türmechanismus 3 in Bezug zum Befestigungsrahmen 2 bei Bedarf verhindert. Diese Arretierungen, analog der Schwenkarretierung 3, können in üblicher Art und Weise ausgewählt und stufenlos oder stufenweise funktionsbedingt agieren.

Der Türmechanismus 3 besitzt ein Absperrelement 3.4, welches bevorzugt aus Rohrsegmenten 3.5, beispielsweise aus Edelstahlrohr, bestehend.

Am Türmechanismus 3, nämlich am unteren Absperrelement 3.4, ist ein Ferkelschutz 3.6, hier als Rohrbügel, angeordnet.

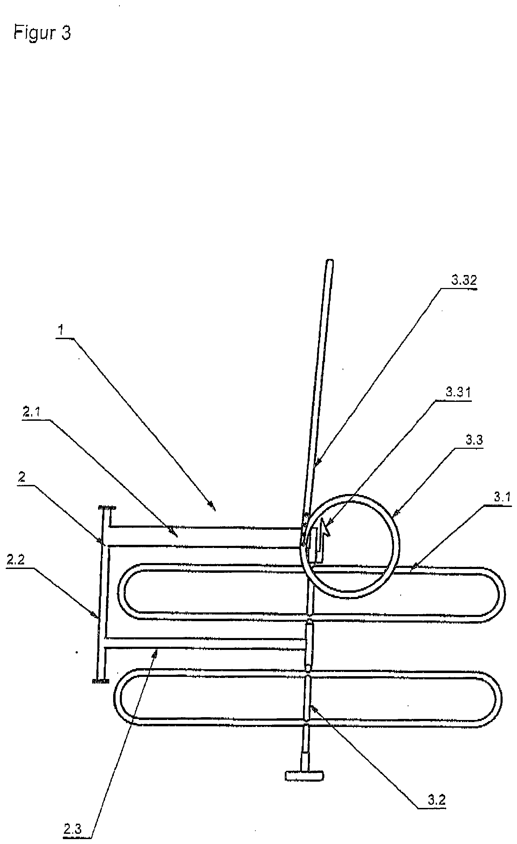

Fig. 3 zeigt ein Ausführungsbeispiel einer alternativen Ausführungsform des Schwenkmechanismus 1 in einer Seitenansicht.

Der Schwenkmechanismus 1 zumindest umfasst einen Befestigungsrahmen 2 mit einer Basisachse 2.2 an welcher ein Ausleger 2.1 angeordnet ist, und ein Türmechanismus 3, welcher zumindest ein Türelement 3.1 mit einer Drehachse 3.2 besitzt, wobei diese Drehachse 3.2 parallel zur Basisachse 2.2 angeordnet ist. Der Türmechanismus 3 ist über die Drehachse 3.2 schwenkbar am Befestigungsrahmen 2 angeordnet.

Der Befestigungsrahmen 2 besitzt außerdem einen Führungsausleger 2.3, an welchem der Türmechanismus 3 schwenkbar über die Drehachse 3.2 an gelenkt ist.

Der Führungsausleger 2.3 besitzt eine Führüngsöffnung 2.5 und der Ausleger 2.1 besitzt eine Öffnung 2.4, durch welche die Drehachse 3.2 des Türmechanismus 3 jeweils verläuft.

Am Befestigungsrahmen 2 ist eine Schwenkarretierung 3.3 mit Arretierungshaken 3.31 angeordnet.

Der Arretierungshaken 3.31 befindet sich in Fig. 3 nicht im Eingriff mit der Lochleiste 3.32, d. h. das Türelement 3.1 ist um die Drehachse 3.2 verdrehbar, so dass beispielsweise ein Durchtritt ermöglicht wäre.

Fig. 4 zeigt ein Ausführungsbeispiel einer Ausführungsform der erfindungsgemäßen Freilaufbox mit zwei Schwenkmechanismen 1 in einer Draufsicht.

Die dargestellte Freilaufbox besitzt eine rechteckige Grundfläche, beispielsweise von 2,1 m x 2,9m.

Die dargestellte Freilaufbox besitzt zwei Türseitenwände 5.1, eine Rückwand 5.2 und eine Stirnwand 5.3.

In die Türseitenwand 5.1 ist jeweils ein Schwenkmechanismen 1 integriert, wobei zumindest einer dieser die Funktion einer Freilaufboxtür erfüllt. Der Ferkelschutz 3.6, angeordnet am Türmechanismus 3, zeigt jeweils in Richtung der Türseitenwand 5.1. Im Bereich der Rückwand 5.2, bevorzugt parallel zur Rückwand 5.2, ist die Ferkelschutzzone 5.4, beispielsweise mit einer Breite von 2,1 m und einer Länge von 0,5m, angeordnet, wobei diese durch übliche Ferkelgitter 5.6 zur Freilaufzone 5.5 in üblicher Art und Weise abgetrennt ist. Die Ferkelschutzzone 5.4 kann die Sau S nicht betreten bzw. sich dort nicht hinlegen, so dass die Ferkel, in Fig. 4 nicht dargestellt, diesbezüglich sicher sind.

Im Bereich der Ferkelgitter 5.6 sind die beiden Befestigungsrahmen 2 senkrecht und voneinander beabstandet, beispielsweise 80 cm beanstandet, angeordnet, und jeweils zumindest am Boden der Freilaufzone 5.5 in üblicher Art und Weise befestigt.

Dabei sind die beiden Schwenkmechanismen 1 mit dem Türmechanismus 3 in Fig. 4 parallel zur und an der Seitenwand 5.1 positioniert und die jeweiligen Schwenkarretierung 3.3 arretiert dargestellt. Bei dieser Positionierung der beiden Schwenkmechanismen 1 in der Freilaufbox kann die Sau S sich unbeschränkt in der Freilaufzone 5.5 der Freilaufbox bewegen, wobei die Freilaufbox geschlossen ist.

Fig. 5 zeigt ein Ausführungsbeispiel einer weiteren Ausführungsform der erfindungsgemäßen Freilaufbox mit zwei Schwenkmechanismen 1 in einer Draufsicht. Die dargestellte Freilaufbox besitzt eine rechteckige Grundfläche, beispielsweise von 2,1 m x 2,9m. Diese Grundfläche umfasst insbesondere die Ferkelschutzzone 5.4 und die Freilaufzone 5.5.

Die dargestellte Freilaufbox besitzt zwei Türseitenwände 5.1, eine Rückwand 5.2 und eine Stirnwand 5.3, welche die Grundfläche begrenzen.

Im Bereich der Rückwand 5.2, bevorzugt parallel zur Rückwand 5.2, ist die Ferkelschutzzone 5.4, beispielsweise mit einer Breite von 2,1 m und einer Länge von 0,5m, angeordnet, wobei diese durch übliche Ferkelgitter 5.6 zur Freilaufzone 5.5 in üblicher Art und Weise abgetrennt ist. Die Ferkel können das Ferkelgitter 5.6 passieren, die Sau S nicht. Die Ferkelschutzzone 5.4 kann die Sau S nicht betreten bzw. sich dort nicht hinlegen, so dass die Ferkel, in Fig. 5 nicht dargestellt, diesbezüglich sicher sind.

Im Bereich der Ferkelgitter 5.6 sind die beiden Befestigungsrahmen 2 senkrecht und von einander beabstandet, beispielsweise 80 cm beabstandet, angeordnet, und jeweils zumindest am Boden der Freilaufzone 5.5 in üblicher Art und Weise befestigt.

Sind die beiden Schwenkmechanismen 1 mit dem Türmechanismus 3 parallel zur und an der stehenden Sau S positioniert, die beiden Türmechanismen 3 miteinander durch zwei Verbindungselemente 4 verbunden und die jeweiligen Schwenkarretierung 3.3 nicht arretiert, kann die Sau S sich in der Freilaufbox dennoch beschränkt bewegen. Die Sau S ist somit nicht gehindert, sich auf den Boden zu legen. Damit kann die Gefahr, dass die Sau S die jungen Ferkel, insbesondere beim Hinlegen drückt, wirkungsvoll gebannt werden(Fig. 5).

Damit ist erstmals ermöglicht, dass die Sau S, eingesperrt zwischen den beiden Schwenkmechanismen 1, sich, insbesondere wie mit einem Parallelogramm, durch die Freilaufbox bewegen kann. Sozusagen ein "freilaufender" Kastenstand, der sich mit der Sau S mitbewegt.

Fig. 6 zeigt ein Ausführungsbeispiel einer weiteren Ausführungsform der erfindungsgemäßen Freilaufbox mit zwei Schwenkmechanismen 1 in einer Draufsicht. Die dargestellte Freilaufbox besitzt eine rechteckige Grundfläche, beispielsweise von 2,1 m x 2,9m.

Die dargestellte Freilaufbox besitzt zwei Türseitenwände 5.1, eine Rückwand 5.2 und eine Stirnwand 5.3.

Im Bereich der Rückwand 5.2, bevorzugt parallel zur Rückwand 5.2, ist die Ferkelschutzzone 5.4, beispielsweise mit einer Breite von 2,1 m und einer Länge von 0,5m, angeordnet, wobei diese durch übliche Ferkelgitter 5.6 zur Freilaufzone 5.5 in üblicher Art und Weise abgetrennt ist. Die Ferkelschutzzone 5.4 kann die Sau S nicht betreten bzw. sich dort nicht hinlegen, so dass die Ferkel diesbezüglich sicher sind.

Im Bereich der Ferkelgitter 5.6 sind die beiden Befestigungsrahmen 2 senkrecht und von einander beabstandet, beispielsweise 80 cm beabstandet, angeordnet, und jeweils zumindest am Boden der Freilaufzone 5.5 in üblicher Art und Weise befestigt.

Sind die beiden Schwenkmechanismen 1 mit dem Türmechanismus 3 diagonal bzw. angewinkelt zur und an der einen Seitenwand 5.1 und an der stehenden Sau S positioniert, die beiden Türmechanismen 3 miteinander durch ein Verbindungselement 4 verbunden und die jeweiligen Schwenkarretierung 3.3 arretiert, steht die Sau S fixiert in der Freilaufbox, d.h. es besteht keine Bewegungsfreiheit. Diese Position kann beispielsweise vor und während der Geburt der Ferkel eingenommen werden.

Um hinter der Sau S einen ausreichenden Freiraum, insbesondere während der Geburt zu haben, kann ein verschwenkbares Abstandssegment 3.7 angeordnet sein.

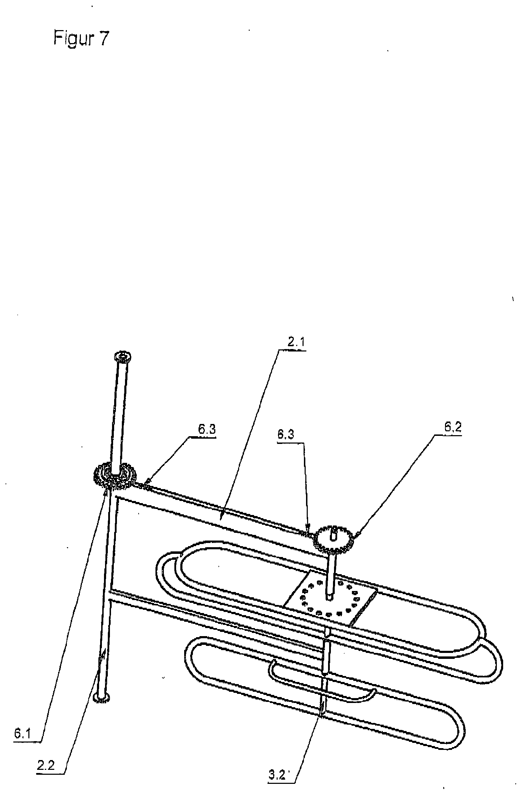

Fig. 7 zeigt ein Ausführungsbeispiel einer alternativen Ausführungsform des Schwenkmechanismus 1 in einer perspektivischen Seitenansicht.

Der Schwenkmechanismus zumindest umfasst einen Befestigungsrahmen 2 mit einer Basisachse 2.2 an welcher ein Ausleger 2.1 angeordnet ist, und ein Türmechanismus 3, welcher zumindest ein Türelement 3.1 mit einer Drehachse 3.2 besitzt, wobei diese Drehachse 3.2 parallel zur Basisachse 2.2 angeordnet ist. Der Türmechanismus 3 ist über die Drehachse 3.2 schwenkbar am Befestigungsrahmen 2 angeordnet.

Zur stufenweisen Arretierung wird eine Ratschenarretierung 6 verwendet. Diese besitzt einen Zahnkranz 6.1, durch welchen die Basisachse 2.2 verläuft, und einen Zahnkranz 6.2, durch welchen die Drehachse 3.2 verläuft. Zwischen dem Zahnkranz 6.1 und dem Zahnkranz 6.2 ist eine Verbindungsstange 6.3 angeordnet. An den beiden Enden der Verbindungsstange 6.4 ist jeweils ein Ratschenmechanismus 6.3 angeordnet.

### Liste der Bezugszeichen

- 1: Schwenkmechanismus
- 2: Befestigungsrahmen
- 2.1: Ausleger
- 2.2: Basisachse
- 2.3: Führungsausleger
- 2.4: Öffnung
- 2.5: Führungsöffnung

- 3: Türmechanismus
- 3.1: Türelement
- 3.2: Drehachse
- 3.3: Schwenkarretierung
- 3.31: Arretierungshaken
- 3.32: Lochscheibe
- 3.4: Absperrelement
- 3.5: Rohrsegmenten
- 3.6: Ferkelschutz
- 3.7: Abstandssegment

- 4: Verbindungselement

- 5: Grundfläche
- 5.1: Türseitenwand
- 5.2: Rückwand
- 5.3: Stirnwand
- 5.4: Ferkelschutzzone
- 5.5: Freilaufzone
- 5.6: Ferkelgitter
- 6.: Ratschenarretierung
- 6.1: Zahnkranz
- 6.2: Zahnkranz
- 6.3: Ratschenmechanismus
- 6.4: Verbindungsstange
- S: Sau

## Patentansprüche

1. Freilaufbox zumindest umfassend zwei Türseitenwände (5.1), eine Rückwand (5.2), eine Stirnwand (5.3) und zwei Schwenkmechanismen (1), wobei jeder dieser Schwenkmechanismen (1) zumindest umfasst einen Befestigungsrahmen (2) mit einer Basisachse (2.2) an welchem zumindest ein Ausleger (2.1) angeordnet ist, und ein Türmechanismus (3), welcher zumindest ein Türelement (3.1) mit einer Drehachse (3.2) besitzt, wobei diese Drehachse (3.2) parallel zur Basisachse (2.2) angeordnet ist, und der Türmechanismus (3) schwenkbar am Befestigungsrahmen (2) angeordnet ist und der Türmechanismus (3) eine Schwenkarretierung (3.3) besitzt, welche eine stufenweise Arretierung des Türelements (3.1) ermöglicht, wobei sich zumindest drei verschiedene Gestaltungen der für die Sau (S) zugänglichen Bereiche der Grundfläche der Freilaufbox ergeben:
- sind die beiden Schwenkmechanismen (1) mit dem Türmechanismus (3) parallel zur und an der Seitenwand (5.1) positioniert und die jeweiligen Schwenkarretierung (3.3) arretiert, kann die Sau (S) sich unbeschränkt in der Freilaufbox bewegen und die Freilaufbox ist in sich geschlossen, aber offen für die Sau (S),
- sind die beiden Schwenkmechanismen (1) mit dem Türmechanismus (3) parallel zur und an der stehenden Sau (S) positioniert, die beiden Türmechanismen (3) miteinander verbunden und die jeweiligen Schwenkarretierung (3.3) nicht arretiert, kann die Sau (S) sich in der Freilaufbox dennoch beschränkt bewegen kann,
- sind die beiden Schwenkmechanismen (1) mit dem Türmechanismus (3) diagonal bzw. angewinkelt zur und an der Seitenwand (5.1) und an der stehenden Sau (S) positioniert, die beiden Türmechanismen (1) miteinander verbunden und die jeweiligen Schwenkarretierung (3.3) arretiert, steht die Sau (S) diagonal fixiert in der Freilaufbox.

2. Freilaufbox gemäß Anspruch 1, **dadurch gekennzeichnet, dass** der Befestigungsrahmen (2) einen Führungsausleger (2.3) besitzt, an welchem der Türmechanismus (3) schwenkbar an gelenkt ist.

3. Freilaufbox gemäß Anspruch 2, **dadurch gekennzeichnet, dass** der Führungsausleger (2.3) eine Führungsöffnung (2.5) besitzt, durch welche die Drehachse (3.2) des Türmechanismus (3) verläuft.

4. Freilaufbox gemäß Anspruch 1, **dadurch gekennzeichnet, dass** der Türmechanismus (3) zumindest ein Absperrelement (3.4), welches bevorzugt aus Rohrsegmenten (3.5) bestehend, besitzt.

5. Freilaufbox gemäß Anspruch 1, **dadurch gekennzeichnet, dass** der Türmechanismus (3) zumindest einen Ferkelschutz (3.6) besitzt.

6. Freilaufbox gemäß Anspruch 1, **dadurch gekennzeichnet, dass** der Ausleger (2.1) eine Öffnung (2.4) besitzt, durch welche die Drehachse (3.2) des Türmechanismus (3) verläuft.

7. Freilaufbox gemäß Anspruch 1, **dadurch gekennzeichnet, dass** am Türelement (3.1) ein verklappbares Abstandssegment (3.7) angeordnet ist.

8. Freilaufbox gemäß Anspruch 1, **dadurch gekennzeichnet, dass** die beiden Schwenkmechanismen (1) durch zumindest ein Verbindungselement (4), starr oder flexibel, verbindbar sind.

9. Freilaufbox gemäß Anspruch 1, **dadurch gekennzeichnet, dass** diese eine Grundfläche von zumindest 6m² besitzt.

10. Verwendung der Freilaufbox gemäß zumindest einem der Ansprüche 1 bis 9 als Jungtieraufzuchtbox, nämlich für Ferkel, Kälber und junge Ziegen, oder Jungtierbehandlungsstand in der Tierhaltung oder dem ökologischen Landbau.

## Claims

1. Free roaming crate comprising at least two door side walls (5.1), one rear wall (5.2), one front wall (5.3), and two swivel mechanisms (1), whereby each of these swivel mechanisms (1) comprises at least one mounting frame (2) with a base axis (2.2), on which at least one arm (2.1) is arranged, and one door mechanism (3), which has at least one door element (3.1) with an axis of rotation (3.2), whereby this axis of rotation (3.2) is arranged parallel to the base axis (2.2), and the door mechanism (3) is arranged for swivel-mounting on the mounting frame (2) and the door mechanism (3) has a swivel lock (3.3), which enables the door element (3.1) to be locked in different positions, whereby at least three different variations of the floor area of the free roaming crate accessible by the sow (S) result:
- when the two swivel mechanisms (1) with the door mechanism (3) are positioned parallel to and on the side wall (5.1) and lock the particular swivel lock (3.3), the sow (S) is able to move freely without restriction in the free roaming crate, and the free roaming crate is closed to the outside, but open on the Inside for the sow (S),
- when the two swivel mechanisms (1) with the door mechanism (3) are positioned parallel to and on the standing sow (S), the two door mechanisms (3) are connected to each other, and the particular swivel lock (3.3) is not locked, the sow (S) nevertheless has limited freedom of movement in the free roaming box,
- when the two swivel mechanisms (1) with the door mechanism (3) are positioned diagonal to or at an angle with respect to and on the side wall (5.1) and the standing sow (S), the two door mechanisms (3) are connected to each other, and the particular swivel lock (3.3) is not locked, the standing sow (S) is held diagonally in position in the free roaming crate.

2. Free roaming crate according to claim 1, **characterized in that** the mounting frame (2) has a guide arm (2.3) on which the door mechanism (3) is swivel hinged.

3. Free roaming crate according to claim 2, **characterized in that** the guide arm (2.3) has a guide opening (2.5) through which the axis of rotation (3.2) of the door mechanism (3) extends.

4. Free roaming crate according to claim 1, **characterized in that** the door mechanism (3) has at least one locking element (3.4), which is preferably comprised of tubular segments (3.5).

5. Free roaming crate according to claim 1, **characterized in that** the door mechanism (3) has at least one piglet protector (3-6).

6. Free roaming crate according to claim 1, **characterized in that** the arm (2.1) has an opening (2.4) through which the axis of rotation (3.2) of the door mechanism (3) extends.

7. Free roaming crate according to claim 1, **characterized in that** a foldable spacer segment (3.7) is arranged on the door element (3.1).

8. Free roaming crate according to claim 1, **characterized in that** the two swivel mechanisms (1) are rigidly or flexibly connectable by at least one connection element (4).

9. Free roaming crate according to claim 1, **characterized in that** said crate has a base area of at least 6 m².

10. Use of the free roaming crate according to at least one of claims 1 to 9 as a rearing box for young animals, namely for piglets, calves, and young goats, or as a treatment stall for young animals in animal husbandry or ecological farming.

## Revendications

1. Box mobile comportant au moins deux parois latérales de porte (5.1), une paroi arrière (5.2), une paroi avant (5.3) et deux mécanismes pivotants (1), chacun des deux mécanismes pivotants (1) comportant au moins un cadre de fixation (2) avec un axe de base (2.2) sur lequel est monté au moins un bras (2.1), et un mécanisme de porte (3), qui est équipé d'au moins un élément de porte (3.1) avec un axe rotatif (3 .2), cet axe rotatif (3.2) étant monté parallèlement à l'axe de base (2.2), et le mécanisme de porte (3) étant monté de manière à pivoter au niveau de cadre de fixation (2) et le mécanisme de porte (3) disposant d'un blocage de pivotement (3.3), qui permet un blocage progressif de l'élément de porte (3.1), ce qui fournira au moins trois aménagements différents des secteurs accessibles à la truie (T) de la surface au sol du box mobile:
- si les deux mécanismes pivotants (1) avec le mécanisme de porte (3) sont positionnés de manière parallèle avec et à la paroi latérale (5.1) et arrête le blocage de pivotement (3.3) resp., la truie (T) peut se déplacer librement dans le box mobile et le box mobile est fermé tout en étant ouvert pour la truie (T),
- si les deux mécanismes pivotants (1) avec le mécanisme de porte (3) sont positionnés de manière parallèle avec et à la truie (T) en position debout, les deux mécanismes de porte (3) sont reliés ensemble et le blocage de pivotement resp. (3.3) n'est pas arrêté, la truie (T) peut toutefois se déplacer de façon limitée dans le box mobile,
- si les deux mécanismes pivotants (1) avec le mécanisme de porte (3) sont positionnés en diagonale ou en formant un angle avec et à la paroi latérale (5.1) et à la truie (T) en position debout, les deux mécanismes de porte (1) sont reliés entre eux et le blocage de pivotement (3.3) resp. est arrêté, la truie (T) est en position debout fixe diagonale dans le box mobile.

2. Box mobile selon la revendication 1, **caractérisé en ce que** le cadre de fixation (2) est équipé d'un bras de guidage (2.3), sur lequel est articulé de manière pivotante le mécanisme de porte (3).

3. Box mobile selon la revendication 2, **caractérisé en ce que** le bras de guidage (2.3) est équipé d'une ouverture de guidage (2.5), par laquelle l'axe rotatif (3.2) du mécanisme de porte (3) fonctionne.

4. Box mobile selon la revendication 1, **caractérisé en ce que** le mécanisme de porte (3) est équipé d'au moins un élément de blocage (3.4), se composant de préférence de segments de tube (3.5).

5. Box mobile selon la revendication 1, **caractérisé en ce que** le mécanisme de porte (3) est équipé d'au moins une protection pour porcelets (3.6).

6. Box mobile selon la revendication 1 **caractérisé en ce que** le bras (2.1) est équipé d'une ouverture (2.4) par laquelle l'axe rotatif (3.2) du mécanisme de porte (3) fonctionne.

7. Box mobile selon la revendication 1 **caractérisé en ce qu'**au niveau de l'élément de porte (3.1) un segment d'espacement (3-7) rabattable est monté.

8. Box mobile selon la revendication 1 **caractérisé en ce que** les deux mécanismes de pivotement (1) peuvent être reliés par au moins un élément de liaison (4), rigide ou flexible.

9. Box mobile selon la revendication 1 **caractérisé en ce que** celui-ci dispose d'une surface au sol d'au moins 6 m².

10. Utilisation du box mobile selon au moins une des revendications 1 à 9 comme box pour l'élevage de jeunes animaux, à savoir les porcelets, les veaux et les chevreaux, ou stalle de traitement pour jeunes animaux dans l'élevage ou l'agriculture biologique.
